# EUROPÄISCHE PATENTANMELDUNG

(11) **EP 3 462 673 A1**
(43) Veröffentlichungstag der Anmeldung: **03.04.2019**
(21) Anmeldenummer: 17194075.2
(22) Anmeldetag: 29.09.2017
(51) Int. Cl.: H04L 12/24, G05B 19/418, H04L 12/751

(54) **VERFAHREN ZUM BETRIEB EINES KOMMUNIKATIONSNETZES EINES INDUSTRIELLEN AUTOMATISIERUNGSSYSTEMS UND STEUERUNGSEINHEIT**

(71) Anmelder: Siemens Aktiengesellschaft, 80333 München (DE)
(72) Erfinder: Gruner, Axel, 90204 Nürnberg (DE); Houyou, Amine Mohamed, Jersey City, NJ 07306 (US); Riedl, Johannes, 84030 Ergolding (DE); Sakic, Ermin, 81379 München (DE)

(57) **Zusammenfassung**

In einem Kommunikationsnetz eines industriellen Automatisierungssystems steuert zumindest eine Steuerungseinheit (101, 102) Funktionen mehrerer Kommunikationsgeräte (200). Mittels erster Kommunikationsgeräte (301) werden Informationen bzw. Dienste zur Nutzung an zweiten Kommunikationsgeräten (302) bereitgestellt werden. In Speichereinheiten (210, 220), die jeweils einem Netzinfrastrukturgerät (201, 202) zugeordnet sind, an das zumindest ein erstes (301) oder zweites Kommunikationsgerät (302) angeschlossen ist, werden jeweils Angaben zu Angeboten bzw. Anforderungen von Informationen bzw. Diensten angeschlossener Kommunikationsgeräte gespeichert. Die Steuerungseinheit (101, 102) erstellt anhand zueinander passender Angebote und Anforderungen Zuordnungen zwischen den ersten (301) und zweiten Kommunikationsgeräten (302) und ermittelt Pfade zwischen einander zugeordneten ersten und zweiten Kommunikationsgeräten. Aus den ermittelten Pfaden werden Weiterleitungsregeln für die zugeordneten Netzinfrastrukturgeräte (200-202) abgeleitet.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

MQTT (MQ Telemetry Transport oder Message Queue Telemetry Transport) ist ein Nachrichtenprotokoll für Maschine-zu-Maschine-Kommunikation (M2M), das für eine Übertragung von Nachrichten mit Telemetriedaten zwischen einem Publisher-Kommunikationsgerät und einem Subscriber-Kommunikationsgerät vorgesehen ist (siehe http://mqtt.org/). Dabei führt ein MQTT-Broker für Informationen zu sämtlichen Publishern und Subscribern von Telemetriedaten eine zentrale Datenbank. Über den MQTT-Broker werden durch Publisher bzw. Subscriber Befehle entgegen genommen bzw. Daten erfasst.

Software Defined Networking (SDN) zielt auf eine Virtualisierung von Kommunikationsnetzfunktionen ab, indem Kommunikationsgeräte wie Router oder Switche funktionell in Control Plane und Data Plane zugeordnete Komponenten unterteilt werden. Die Data Plane umfasst Funktionen bzw. Komponenten zur Weiterleitung von Datenpaketen bzw. -rahmen. Die Control Plane umfasst hingegen Management-Funktionen zur Steuerung der Weiterleitung bzw. der Komponenten der Data Plane. Mit OpenFlow ist beispielsweise ein Standard für Software-implementierte Control Planes definiert. Eine Abstraktion von Hardware als virtuelle Services ermöglicht einen Verzicht auf eine manuelle Konfiguration der Hardware, insbesondere indem eine programmierbare, zentrale Steuerung von Netzverkehr geschaffen wird. OpenFlow unterstützt eine Partitionierung von System-Ressourcen in Network Slices, durch die unabhängig von anderen bestehenden Network Slices eine Bereitstellung definierter System-Ressourcen gewährleistet wird.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

In EP 2 795 842 B1 ist eine Steuerungseinheit zur Bereitstellung von Kommunikationsdiensten innerhalb eines physikalischen Kommunikationsnetzes beschrieben. Diese Kommunikationsdienste werden durch mehrere auf Kommunikationsgeräten ablaufende Anwendungen genutzt, für die jeweils Anforderungen an die Kommunikationsdienste spezifiziert sind. Durch die Steuerungseinheit wird ein Kommunikationsnetzmodell erzeugt, das eine Topologie des physikalischen Kommunikationsnetzes wiedergibt und für jedes Kommunikationsgerät ein Netzknotenmodell umfasst. Das Netzknotenmodell beschreibt Funktionen und Ressourcen des jeweiligen Kommunikationsgeräts. Außerdem berechnet die Steuerungseinheit für jede auf den Kommunikationsgeräten ablaufende Anwendung ein virtuelles Kommunikationsnetz, indem die Anforderungen der jeweiligen Anwendung an die Kommunikationsdienste auf das Kommunikationsnetzmodell abgebildet werden. Die berechneten virtuellen Kommunikationsnetze umfassen jeweils zumindest 2 durch ein Netzknotenmodell beschriebene Netzknoten und eine Partition bzw. Network Slice ausgewählter Kommunikationsnetzressourcen, die durch die Kommunikationsgeräte bereitgestellt werden.

WO 2016/206741 A1 betrifft ein Kommunikationsgerät für ein Software Defined Network, wobei das Kommunikationsgerät Steuerungsdaten mit einem Controller austauscht. Auf eine Anforderung des Kommunikationsgeräts übermittelt der Controller eine Information über eine eindeutige Kommunikationsadresse des Controllers an das Kommunikationsgerät. Diese Kommunikationsadresse wird für eine Übermittlung von Steuerungsdaten an den Controller in eine Gerätekonfiguration des Kommunikationsgeräts eingetragen.

In komplexen Automatisierungssystemen ist eine Ermittlung, durch welche Benutzer bzw. Geräte Dienste oder Informationen bereitgestellt bzw. genutzt werden, häufig sehr aufwendig. Dies gilt insbesondere bei einer heterogenen Netzinfrastruktur, in der jeweils sehr unterschiedliche Kommunikationsprotokolle bei einem Datenaustausch zwischen Dienstanbietern (Publisher) und Dienstnutzern (Subscriber) verwendet werden.

Der vorliegenden Erfindung liegt die Aufgabe zugrunde, ein Verfahren zum zuverlässigen Betrieb eines Kommunikationsnetzes für ein industrielles Automatisierungssystem anzugeben, das eine effiziente und zuverlässige Herstellung eines Datenaustauschs zwischen Dienstanbietern und Dienstnutzern in einem industriellen Automatisierungssystem ermöglicht, sowie eine geeignete Vorrichtung zur Durchführung des Verfahrens zu schaffen.

Diese Aufgabe wird erfindungsgemäß durch ein Verfahren mit den in Anspruch 1 genannten Merkmalen und durch eine Steuerungseinheit mit den in Anspruch 14 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Betrieb eines Kommunikationsnetzes eines industriellen Automatisierungssystems steuert zumindest eine Steuerungseinheit Funktionen mehrerer Netzinfrastrukturgeräte. Durch die Netzinfrastrukturgeräte, insbesondere Switches, Router oder Access Points, werden Datagramme innerhalb des Kommunikationsnetzes weitergeleitet. Den Netzinfrastrukturgeräten ist jeweils zumindest eine Steuerungseinheit zugeordnet. Beispielsweise kann jedem Netzinfrastrukturgerät eine Haupt-Steuerungseinheit und eine Reserve-Steuerungseinheit zugeordnet sein. Mittels erster Kommunikationsgeräte, beispielsweise Publisher-Kommunikationsgeräte, werden Informationen bzw. Dienste zur Nutzung an zweiten Kommunikationsgeräten, beispielsweise Subscriber-Kommunikationsgeräten, bereitgestellt. Dabei ist Kommunikationsgeräten jeweils eine Rolle als erstes bzw. zweites Kommunikationsgerät zuordenbar. Insbesondere können einem Kommunikationsgerät beide Rollen zugeordnet sein. Vorzugsweise werden die Informationen bzw. Dienste mittels der ersten Kommunikationsgeräte entsprechend Open Platform Communications Unified Architecture Protokoll (OPC UA) zur Nutzung an den zweiten Kommunikationsgeräten bereitgestellt, insbesondere mittels OPC UA Publish/Subscribe.

In Speichereinheiten, die jeweils einem Netzinfrastrukturgerät zugeordnet sind, an das zumindest ein erstes oder zweites Kommunikationsgerät angeschlossen ist, werden erfindungsgemäß jeweils Angaben zu Angeboten von Informationen bzw. Diensten angeschlossener erster Kommunikationsgeräte bzw. Angaben zu Anforderungen von Informationen bzw. Diensten angeschlossener zweiter Kommunikationsgeräte gespeichert. Die den Netzinfrastrukturgeräten zugeordneten Speichereinheiten werden für die Steuerungseinheit zum Zugriff verfügbar gemacht. Die Angaben zu den Angeboten von Informationen bzw. Diensten angeschlossener erster Kommunikationsgeräte und die Angaben zu den Anforderungen von Informationen bzw. Diensten werden vorzugsweise einheitlich nach Ordnungsbegriffen, beispielsweise Topics, gegliedert in den Speichereinheiten gespeichert.

Erfindungsgemäß erstellt die Steuerungseinheit anhand zueinander passender Angebote und Anforderungen Zuordnungen zwischen den ersten Kommunikationsgeräten und den zweiten Kommunikationsgeräten und ermittelt Pfade zwischen einander zugeordneten ersten und zweiten Kommunikationsgeräten ermittelt. Vorteilhafterweise ermittelt die Steuerungseinheit hierzu anschließend eine vollständige Topologie des Kommunikationsnetzes. Eine derartige Topologie-Erkennung kann beispielsweise mittels Link Layer Discovery Protocol (LLDP) bzw. entsprechend IEEE-802.1AB durchgeführt werden, insbesondere mittels LLDP-Agenten der Netzinfrastrukturgeräte, die Informationen über das jeweilige Netzinfrastrukturgerät an Nachbargeräte senden und von diesen ebenfalls entsprechende Informationen empfangen. Die Pfade können durch die Steuerungseinheit beispielsweise auf Grundlage des Dijkstra-Algorithmus, des Bellman-Ford-Algorithmus oder des Algorithmus von Floyd und Warshall ermittelt werden. Insbesondere kann eine Pfad-Ermittlung mittels sukzessiver Anwendung von Dijkstra-Algorithmen mit Rand- bzw. Zwangsbedingungen (constrained Dijkstra's algorithm) erfolgen. Die Steuerungseinheit leitet aus den ermittelten Pfaden erfindungsgemäß Weiterleitungsregeln für die zugeordneten Netzinfrastrukturgeräte ab und übermittelt diese Weiterleitungsregeln an die zugeordneten Netzinfrastrukturgeräte. Die Netzinfrastrukturgeräte leiten empfangene Datagramme vorzugsweise ausschließlich entsprechend den durch von der Steuerungseinheit übermittelten Weiterleitungsregeln weiter.

Bei einer Mehrzahl möglicher Zuordnungen zwischen den ersten Kommunikationsgeräten und den zweiten Kommunikationsgeräten ermittelt die Steuerungseinheit anhand der zueinander passenden Angebote und Anforderungen vorteilhafterweise sämtliche Optionen für die Zuordnungen. Für die ermittelten Optionen, also für mögliche Paare von ersten und zweiten Kommunikationsgeräten ermittelt die Steuerungseinheit Pfade zwischen den jeweiligen ersten und zweiten Kommunikationsgeräten sowie deren Pfadkosten. Eine derartige Pfadermittlung kann beispielsweise auch entsprechend Shortest Path Bridging (SPB) bzw. IEEE 802.1aq erfolgen. Die Steuerungseinheit wählt vorteilhafterweise jeweils die Option mit den geringsten Pfadkosten für die Zuordnungen zwischen den ersten Kommunikationsgeräten und den zweiten Kommunikationsgeräten aus. Beispielsweise kann zu allen möglichen Optionen für die Zuordnungen zwischen den ersten und zweiten Kommunikationsgeräte eine nach zweiten Kommunikationsgeräten und deren Anforderungen gruppierte sowie nach Pfadkosten sortierte Liste mit resultierenden Pfadkosten geführt werden. Anhand dieser Liste kann die jeweilige Option mit den geringsten Pfadkosten einfach ausgewählt werden.

Entsprechend einer besonders bevorzugten Ausgestaltung des erfindungsgemäßen Verfahrens sind die Netzinfrastrukturgeräte einem Software Defined Network zugeordnet, das eine als Control Plane bezeichnete Kommunikationssteuerungsebene und eine als Data Plane bezeichnete Datenübermittlungsebene umfasst. Während die Steuerungseinheit der Control Plane zugeordnet ist, sind die Netzinfrastrukturgeräte der Data Plane zugeordnet. Darüber hinaus können durch die Steuerungseinheit Flow-Tabellen vorgegeben werden, aus denen Routing-Tabellen bzw. Forwarding-Tabellen für die der Steuerungseinheit zugeordneten Netzinfrastrukturgeräte abgeleitet werden.

Vorteilhafterweise ist das Kommunikationsnetz in mehrere Partitionen unterteilt, die vorgebbare Anteile an Systemressourcen von Netzinfrastrukturgeräten umfassen, die der jeweiligen Partition zugeordnet sind. Die Steuerungseinheit ermittelt dementsprechend bei Kommunikationsdienst-Anforderungen jeweils einen Pfad innerhalb der jeweiligen Partition. Die Partitionen sind insbesondere Network Slices und können mittels eines Engineering-Systems manuell durch einen Systemadministrator oder automatisiert festgelegt werden.

Entsprechend einer weiteren vorteilhaften Ausgestaltung des erfindungsgemäßen Verfahrens umfassen die Anforderungen der zweiten Kommunikationsgeräte Dienstgüte-Anforderungen. In diesem Fall überprüft die Steuerungseinheit, ob für die Dienstgüte-Anforderungen entlang der ermittelten Pfade jeweils erforderliche Systemressourcen verfügbar sind. Nur bei einem positiven Ermittlungsergebnis reserviert die Steuerungseinheit für die Anforderungen jeweils erforderliche Systemressourcen und steuert Routing- oder Switching-Funktionen der Netzinfrastrukturgeräte entsprechend den ermittelten Pfaden. Auf diese Weise können für Subscriber-Anforderungen mit Quality of Service Randbedingungen erforderliche Reservierungen aufwandsarm und sicher realisiert werden. Außerdem kann die Steuerungseinheit in den zugeordneten Netzinfrastrukturgeräten vorteilhafterweise eine Bandbreitenbegrenzung für Datenverkehr zwischen den einander zugeordneten ersten und zweiten Kommunikationsgeräten entlang der ermittelten Pfade steuern.

Die Steuerungseinheit wird vorzugsweise bei Änderungen der in den Speichereinheiten gespeicherten Angaben zu den Angeboten von Informationen bzw. Diensten oder zu den Anforderungen von Informationen bzw. Diensten benachrichtigt und aktualisiert die Zuordnungen zwischen den ersten Kommunikationsgeräten und den zweiten Kommunikationsgeräten. Hierauf ermittelt die Steuerungseinheit aktualisierte Pfade, leitet aus den aktualisierten Pfaden aktualisierte Weiterleitungsregeln ab und übermittelt diese zur Anwendung an die zugeordneten Netzinfrastrukturgeräte. Darüber hinaus kann die Steuerungseinheit für eine Verteilung von in den Speichereinheiten gespeicherten Angaben zu den Angeboten von Informationen bzw. Diensten und zu den Anforderungen von Informationen bzw. Diensten an Netzinfrastrukturgeräte an jeweils benachbarten Netzknoten Weiterleitungsregeln vorgeben. Vorteilhafterweise werden die in den Speichereinheiten gespeicherten Angaben nur an Netzinfrastrukturgeräte verteilt, an die erste oder zweite Kommunikationsgeräte angeschlossen sind.

Darüber hinaus authentisiert sich die Steuerungseinheit vorzugsweise gegenüber den zugeordneten Netzinfrastrukturgeräten. Erst nach erfolgreicher Authentifizierung erhält die Steuerungseinheit Steuerungszugriff auf die zugeordneten Netzinfrastrukturgeräte. Zur Authentifizierung können beispielsweise manuell bzw. durch einen Administrator an die Netzinfrastrukturgeräte bereitgestellte öffentliche digitale Schlüssel der Steuerungseinheit verwendet werden.

Die erfindungsgemäße Steuerungseinheit ist zur Durchführung eines Verfahrens entsprechend vorangehenden Ausführungen vorgesehen und dafür ausgestaltet sowie eingerichtet, Funktionen mehrerer zugeordneter Netzinfrastrukturgeräte zu steuern, wobei die Netzinfrastrukturgeräte für eine Weiterleitung von Datagrammen innerhalb eines Kommunikationsnetzes vorgesehen sind. Außerdem ist die Steuerungseinheit dafür ausgestaltet und eingerichtet, aus Speichereinheiten Angaben zu Angeboten von Informationen bzw. Diensten erster Kommunikationsgeräte bzw. Angaben zu Anforderungen von Informationen bzw. Diensten zweiter Kommunikationsgeräte abzufragen. Dabei sind die Speichereinheiten jeweils einem Netzinfrastrukturgerät zugeordnet sind, an das zumindest ein erstes oder zweites Kommunikationsgerät angeschlossen ist.

Erfindungsgemäß ist die Steuerungseinheit dafür ausgestaltet und eingerichtet, anhand zueinander passender Angebote und Anforderungen Zuordnungen zwischen den ersten Kommunikationsgeräten und den zweiten Kommunikationsgeräten zu erstellen und Pfade zwischen einander zugeordneten ersten und zweiten Kommunikationsgeräten zu ermitteln. Darüber hinaus ist die Steuerungseinheit dafür ausgestaltet und eingerichtet, aus den ermittelten Pfaden Weiterleitungsregeln für die zugeordneten Netzinfrastrukturgeräte abzuleiten und an diese zur Anwendung zu übermitteln und die zugeordneten Netzinfrastrukturgeräte dazu zu veranlassen, empfangene Datagramme entsprechend den vorgegebenen Weiterleitungsregeln weiterzuleiten.

Die vorliegende Erfindung wird nachfolgend an einem Ausführungsbeispiel anhand der Zeichnung näher erläutert. Es zeigt die
- Figur: ein mehrere Netzinfrastrukturgeräte und diesen zugeordnete Steuerungseinheiten umfassendes Kommunikationsnetz eines industriellen Automatisierungssystems.

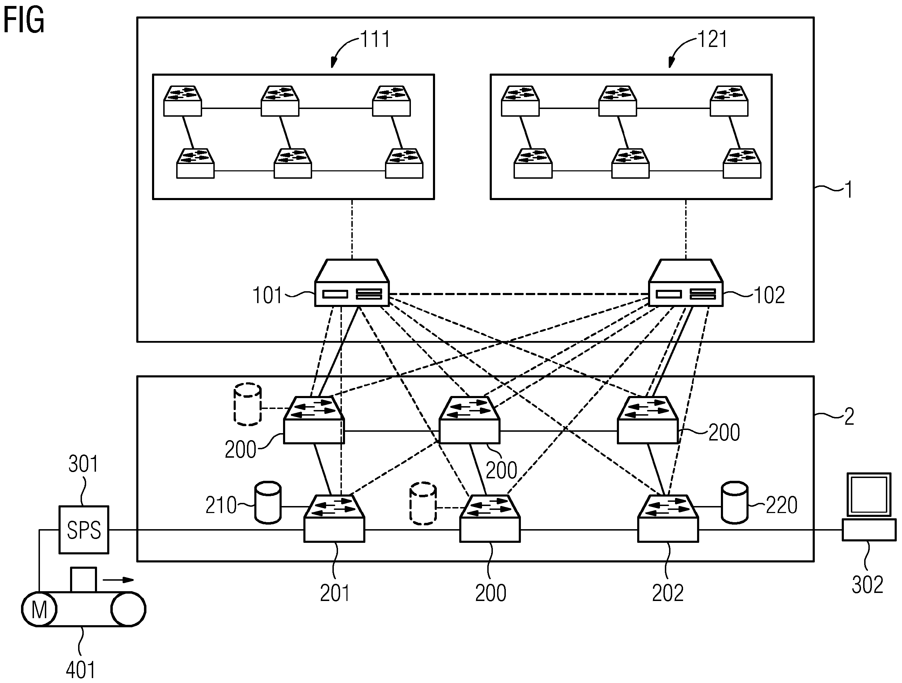

Das in Figur 1 dargestellte Kommunikationsnetz eines industriellen Automatisierungssystems umfasst mehrere Netzinfrastrukturgeräte 200-202 und mehrere Steuerungseinheiten 101, 102. Die Netzinfrastrukturgeräte 200-202 können beispielsweise Switche, Router oder Firewalls sein und zum Anschluss von speicherprogrammierbaren Steuerungen 301, Eingabe/Ausgabe-Einheiten (I/O-Module) oder Bedien- und Beobachtungsstationen 302 des industriellen Automatisierungssystems dienen. Speicherprogrammierbare Steuerungen 301 umfassen typischerweise jeweils ein Kommunikationsmodul, eine Zentraleinheit sowie zumindest eine Eingabe/Ausgabe-Einheit und stellen somit Kommunikationsgeräte dar. Dies gilt auch für Bedien- und Beobachtungsstationen 302. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul ist eine speicherprogrammierbare Steuerung 301 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 301 und einer durch die speicherprogrammierbare Steuerung 301 gesteuerten Maschine oder Vorrichtung 401. Die Zentraleinheit ist insbesondere für eine Ermittlung geeigneter Steuerungsgrößen aus erfassten Messgrößen vorgesehen. Obige Komponenten der speicherprogrammierbaren Steuerung 301 sind im vorliegenden Ausführungsbeispiel über ein Rückwandbus-System miteinander verbunden.

Eine Bedien- und Beobachtungsstation 302 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 302 zur Anzeige von Werten eines Regelungskreises und zur Veränderung von Regelungsparametern verwendet. Bedien- und Beobachtungsstationen 302 umfassen zumindest eine graphische Benutzerschnittstelle, ein Eingabegerät, eine Prozessoreinheit und ein Kommunikationsmodul.

Die Netzinfrastrukturgeräte 200-202 sind im vorliegenden Ausführungsbeispiel einem Software Defined Network zugeordnet, das eine als Control Plane bezeichnete Kommunikationssteuerungsebene 1 und eine als Data Plane bezeichnete Datenübermittlungsebene 2 umfasst. Die Steuerungseinheiten 101, 102 als SDN-Controller sind der Control Plane zugeordnet, während die Netzinfrastrukturgeräte 200-202 der Data Plane zugeordnet sind. Durch die Steuerungseinheiten 101, 102 werden beispielsweise Flow-Tabellen für Switche oder Router vorgegeben, aus denen Routing-Regeln bzw. Forwarding-Regeln für der jeweiligen Steuerungseinheit 101, 102 zugeordnete Netzinfrastrukturgeräte 200-202 abgeleitet werden. Die Steuerungseinheiten 101, 102 steuern also Funktionen mehrerer zugeordneter Netzinfrastrukturgeräte 200-202. Darüber hinaus kann das Kommunikationsnetz in mehrere Partitionen, Network Slices, unterteilt sein, die vorgebbare Anteile an Systemressourcen von Netzinfrastrukturgeräten umfassen, die der jeweiligen Partition zugeordnet sind. In diesem Fall ermitteln die Steuerungseinheiten 101, 102 bei Kommunikationsdienst-Anforderungen Pfade innerhalb der jeweiligen Partition. Die Partitionen können beispielsweise mittels eines Engineering-Systems manuell durch einen Systemadministrator oder automatisiert festgelegt werden. Für jede Steuerungseinheit 101, 101 ist im vorliegenden Ausführungsbeispiel jeweils eine separate Ressourcensicht 111, 121 mit den Anteilen an Systemressourcen vorgesehen.

Im vorliegenden Ausführungsbeispiel sind jedem Netzinfrastrukturgerät 200-202 jeweils eine Haupt-Steuerungseinheit 101 und eine Reserve-Steuerungseinheit 102 zugeordnet. Die Haupt-Steuerungseinheit 101 und die Reserve-Steuerungseinheit 102 sind zueinander redundant. Insbesondere übernimmt die Haupt-Steuerungseinheit 101 dabei eine Master-Rolle, während der Reserve-Steuerungseinheit 102 eine Slave-Rolle zugewiesen wird. Die Steuerungseinheiten 101, 102 authentisieren sich vorzugsweise gegenüber den zugeordneten Netzinfrastrukturgeräten 200-202 und erhalten erst nach erfolgreicher Authentifizierung Steuerungszugriff auf die zugeordneten Netzinfrastrukturgeräte 200-202.

Insbesondere in großen Kommunikationsnetzen mit einer Vielzahl von Steuerungseinheiten kann eine Zuordnung zwischen den Steuerungseinheiten und den Netzinfrastrukturgeräten beispielsweise entsprechend First-Come-First-Serve- oder Round-Robin-Prinzip oder durch manuelle Selektion erfolgen. In Abhängigkeit von anwendungs- oder einzelfallspezifischen Redundanzanforderungen können auch mehr als eine Reserve-Steuerungseinheit vorgesehen werden. Darüber hinaus sollte das Kommunikationsnetz insbesondere für eine Realisierung redundanter Steuerungspfade einen hinreichenden Vermaschungsgrad bzw. zumindest eine Ring-Topologie aufweisen.

Mittels erster Kommunikationsgeräte, Publisher-Kommunikationsgeräte, werden Informationen bzw. Dienste zur Nutzung an zweiten Kommunikationsgeräten, Subscriber-Kommunikationsgeräten, bereitgestellt. Einem Kommunikationsgerät kann gleichzeitig sowohl eine Rolle als Publisher-Kommunikationsgerät als auch eine Rolle als Subscriber-Kommunikationsgerät zugeordnet werden, beispielsweise wenn es einerseits Automatisierungsdienste bereitstellt und andererseits Automatisierungsdienste anderer Geräte nutzt. Beispielsweise können die Informationen bzw. Dienste mittels der Publisher-Kommunikationsgeräte entsprechend Open Platform Communications Unified Architecture Protokoll (OPC UA) zur Nutzung an den Subscriber-Kommunikationsgeräten bereitgestellt werden, insbesondere mittels OPC UA Publish/Subscribe.

Im vorliegenden Ausführungsbeispiel stellt die speicherprogrammierbare Steuerung 301 ein Publisher-Kommunikationsgerät dar, während die Bedien- und Beobachtungsstation 302 eine Rolle als Subscriber-Kommunikationsgerät wahrnimmt und insbesondere durch die speicherprogrammierbare Steuerung 301 bereitgestellte Informationen empfängt. Grundsätzlich könnte die Bedien- und Beobachtungsstation 302 von der speicherprogrammierbaren Steuerung 301 empfangene Informationen analysieren und hieraus Steuerungsparameter für die speicherprogrammierbare Steuerung 301 vorgeben. Somit würden sowohl die speicherprogrammierbare Steuerung 301 als auch die Bedien- und Beobachtungsstation beide Rollen wahrnehmen. Im Sinn einer vereinfachten Darstellung wird nachfolgend davon ausgegangen, dass beide Geräte jeweils nur eine zugeordnete Rolle aufweisen.

In Datenbanken 210, 220, die jeweils dem Netzinfrastrukturgerät 201, 202 zugeordnet sind, an das die speicherprogrammierbare Steuerung 301 bzw. die Bedien- und Beobachtungsstation 302 angeschlossen ist, werden jeweils
- Angaben zu Angeboten von Informationen und Diensten angeschlossener Publisher-Kommunikationsgeräte und
- Angaben zu Anforderungen von Informationen und Diensten angeschlossener Subscriber-Kommunikationsgeräte gespeichert. Dabei können die Publisher- bzw. Subscriber-Kommunikationsgeräte jeweils entsprechend unterschiedlichen Kommunikationsprotokollen mit den Netzinfrastrukturgeräten kommunizieren, an die sie angeschlossen sind. Die Angaben zu den Angeboten und Anforderungen von Informationen und Diensten angeschlossener Publisher- und Subscriber-Kommunikationsgeräte werden im vorliegenden Ausführungsbeispiel einheitlich nach Topics gegliedert in den Datenbanken 210, 220 gespeichert. Dies vereinfacht eine Suche nach relevanten Angeboten bzw. Anforderungen.

Darüber hinaus werden die Datenbanken 210, 220 für die Steuerungseinheiten 101, 102 zum Zugriff verfügbar gemacht. Die Steuerungseinheiten 101, 102, insbesondere die Haupt-Steuerungseinheit 101, erstellen anhand zueinander passender bzw. übereinstimmender Angebote und Anforderungen Zuordnungen zwischen den Publisher-Kommunikationsgeräten und den Subscriber-Kommunikationsgeräten erstellt und ermitteln Pfade zwischen einander zugeordneten Publisher- und Subscriber-Kommunikationsgeräten.

Falls grundsätzlich mehrere Zuordnungen zwischen Publisher-Kommunikationsgeräten und Subscriber-Kommunikationsgeräten hinsichtlich ausgewählter Topics möglich sind, ermitteln die Steuerungseinheiten 101, 102 anhand der zueinander passenden Angebote und Anforderungen zunächst sämtliche Optionen für die Zuordnungen. Für die ermittelten Optionen bzw. für mögliche Publisher-Subscriber-Paare ermitteln die Steuerungseinheiten 101, 102 Pfade zwischen den jeweiligen Publisher- und Subscriber-Kommunikationsgeräten sowie deren Pfadkosten. Anschließend wählen die Steuerungseinheiten 101, 102 jeweils die Option mit den geringsten Pfadkosten für die Zuordnungen zwischen den Publisher-Kommunikationsgeräten und den Subscriber-Kommunikationsgeräten aus.

Aus den ermittelten Pfaden leiten die Steuerungseinheiten 101, 102 Weiterleitungsregeln für die zugeordneten Netzinfrastrukturgeräte 200-202 ab und übermitteln die Weiterleitungsregeln an die Netzinfrastrukturgeräte 200-202. Im vorliegenden Ausführungsbeispiel leiten die Netzinfrastrukturgeräte 200-202 empfangene Datagramme, insbesondere Frames und Datenpakete, nach Abschluss eines Bootstrapping-Vorgangs ausschließlich entsprechend den durch die Steuerungseinheiten 101, 102 übermittelten Weiterleitungsregeln weiter. Obige Schritte müssen nicht durch beide Steuerungseinheiten 101, 102 parallel ausgeführt werden. Es ist bereits ausreichend, wenn allein die Haupt-Steuerungseinheit 101 entsprechende Aufgaben wahrnimmt. Die Reserve-Steuerungseinheit 102 übernimmt diese Aufgaben vorzugsweise nur bei einem Ausfall der Haupt-Steuerungseinheit.

Die Anforderungen von Subscriber-Kommunikationsgeräten können zusätzlich QoS-Anforderungen (Quality of Service) umfassen. In diesem Fall überprüfen die Steuerungseinheiten 101, 102, ob für die QoS-Anforderungen entlang der ermittelten Pfade jeweils erforderliche Systemressourcen verfügbar sind. Im Fall eines positiven Ermittlungsergebnisses reservieren die Steuerungseinheiten 101, 102 für Subscriber-Anforderungen jeweils erforderliche Systemressourcen und steuern Routing- bzw. Switching-Funktionen der Netzinfrastrukturgeräte 200-202 entsprechend den ermittelten Pfaden. Zusätzlich können die Steuerungseinheiten 101, 102 in den zugeordneten Netzinfrastrukturgeräten 200-202 eine Bandbreitenbegrenzung für Datenverkehr zwischen den einander zugeordneten Publisher- und Subscriber-Kommunikationsgeräten entlang der ermittelten Pfade steuern. Dies kann beispielsweise entsprechend für Time-Sensitive Networking (TSN) entwickelter Ansätze erfolgen.

Die Steuerungseinheiten 101, 102 werden bei Änderungen der in den Datenbanken 210, 220 gespeicherten Angaben benachrichtigt und aktualisieren dementsprechend die Zuordnungen zwischen Publisher- und Subscriber-Kommunikationsgeräten. Infolge dessen ermitteln die Steuerungseinheiten 101, 102 aktualisierte Pfade, leiten aus den aktualisierten Pfaden aktualisierte Weiterleitungsregeln ab und übermitteln diese zur Anwendung an die zugeordneten Netzinfrastrukturgeräte 200-202.

Im vorliegenden Ausführungsbeispiel geben die Steuerungseinheiten 101, 102 auch für eine Verteilung von in den Datenbanken 210, 220 gespeicherten Angaben an Netzinfrastrukturgeräte 200 an jeweils benachbarten Netzknoten Weiterleitungsregeln vor. Dies gilt jedoch nur für Netzinfrastrukturgeräte 200, an die Publisher- oder Subscriber-Kommunikationsgeräte angeschlossen sind.

## Patentansprüche

1. Verfahren zum Betrieb eines Kommunikationsnetzes eines industriellen Automatisierungssystems, bei dem
- zumindest eine Steuerungseinheit (101, 102) Funktionen mehrerer Netzinfrastrukturgeräte (200-202) steuert, wobei durch die Netzinfrastrukturgeräte Datagramme innerhalb des Kommunikationsnetzes weitergeleitet werden und den Netzinfrastrukturgeräten jeweils zumindest eine Steuerungseinheit zugeordnet ist,
- mittels erster Kommunikationsgeräte (301) Informationen und/oder Dienste zur Nutzung an zweiten Kommunikationsgeräten (302) bereitgestellt werden, wobei Kommunikationsgeräten jeweils eine Rolle als erstes und/oder zweites Kommunikationsgerät zuordenbar ist,
- in Speichereinheiten (210, 220), die jeweils einem Netzinfrastrukturgerät (201, 202) zugeordnet sind, an das zumindest ein erstes (301) oder zweites Kommunikationsgerät (302) angeschlossen ist, jeweils Angaben zu Angeboten von Informationen und/oder Diensten angeschlossener erster Kommunikationsgeräte und/oder Angaben zu Anforderungen von Informationen und/oder Diensten angeschlossener zweiter Kommunikationsgeräte gespeichert werden,
- die den Netzinfrastrukturgeräten (201, 202) zugeordneten Speichereinheiten (210, 220) für die Steuerungseinheit (101, 102) zum Zugriff verfügbar gemacht werden,
- die Steuerungseinheit (101, 102) anhand zueinander passender Angebote und Anforderungen Zuordnungen zwischen den ersten Kommunikationsgeräten (301) und den zweiten Kommunikationsgeräten (302) erstellt und Pfade zwischen einander zugeordneten ersten und zweiten Kommunikationsgeräten ermittelt,
- die Steuerungseinheit (101, 102) aus den ermittelten Pfaden Weiterleitungsregeln für die zugeordneten Netzinfrastrukturgeräte (200-202) ableitet und an diese übermittelt,
- die Netzinfrastrukturgeräte (200-202) empfangene Datagramme entsprechend den Weiterleitungsregeln weiterleiten.

2. Verfahren nach Anspruch 1,
bei dem die Anforderungen der zweiten Kommunikationsgeräte (302) Dienstgüte-Anforderungen umfassen, bei dem die Steuerungseinheit (101, 102) überprüft, ob für die Dienstgüte-Anforderungen entlang der ermittelten Pfade jeweils erforderliche Systemressourcen verfügbar sind und bei dem die Steuerungseinheit für die Anforderungen nur bei einem positiven Ermittlungsergebnis jeweils erforderliche Systemressourcen reserviert und Routing- oder Switching-Funktionen der Netzinfrastrukturgeräte (200-202) entsprechend den ermittelten Pfaden steuert.

3. Verfahren nach einem der Ansprüche 1 oder 2,
bei dem die Steuerungseinheit (101, 102) in den zugeordneten Netzinfrastrukturgeräten eine Bandbreitenbegrenzung für Datenverkehr zwischen den einander zugeordneten ersten (301) und zweiten Kommunikationsgeräten (302) entlang der ermittelten Pfade steuert.

4. Verfahren nach einem der Ansprüche 1 bis 3,
bei dem die Steuerungseinheit (101, 102) bei Änderungen der in den Speichereinheiten (210, 220) gespeicherten Angaben zu den Angeboten von Informationen und/oder Diensten oder zu den Anforderungen von Informationen und/oder Diensten benachrichtigt wird und die Zuordnungen zwischen den ersten Kommunikationsgeräten (301) und den zweiten Kommunikationsgeräten (302) aktualisiert, bei dem die Steuerungseinheit aktualisierte Pfade ermittelt und bei dem die Steuerungseinheit aus den aktualisierten Pfaden aktualisierte Weiterleitungsregeln ableitet und diese zur Anwendung an die zugeordneten Netzinfrastrukturgeräte übermittelt.

5. Verfahren nach einem der Ansprüche 1 bis 4,
bei dem die Steuerungseinheit (101, 102) für eine Verteilung von in den Speichereinheiten (210, 220) gespeicherten Angaben zu den Angeboten von Informationen und/oder Diensten und zu den Anforderungen von Informationen und/oder Diensten an Netzinfrastrukturgeräte (200) an jeweils benachbarten Netzknoten Weiterleitungsregeln vorgibt.

6. Verfahren nach Anspruch 5,
bei dem die in den Speichereinheiten gespeicherten Angaben nur an Netzinfrastrukturgeräte (210, 220) verteilt werden, an die erste (301) oder zweite Kommunikationsgeräte (302) angeschlossen sind.

7. Verfahren nach einem der Ansprüche 1 bis 6,
bei dem die Angaben zu den Angeboten von Informationen und/oder Diensten angeschlossener erster Kommunikationsgeräte (301) und die Angaben zu den Anforderungen von Informationen und/oder Diensten einheitlich nach Ordnungsbegriffen gegliedert in den Speichereinheiten gespeichert werden.

8. Verfahren nach einem der Ansprüche 1 bis 7,
bei dem die Netzinfrastrukturgeräte (200-202) einem Software Defined Network zugeordnet sind, das eine als Control Plane bezeichnete Kommunikationssteuerungsebene und eine als Data Plane bezeichnete Datenübermittlungsebene umfasst, bei dem die Steuerungseinheit (101, 102) der Control Plane zugeordnet ist und bei dem die Netzinfrastrukturgeräte der Data Plane zugeordnet sind.

9. Verfahren nach Anspruch 8,
bei dem die Netzinfrastrukturgeräte (200-202) Router und/oder Switches umfassen und bei dem durch die Steuerungseinheit (101, 102) Flow-Tabellen vorgebbar sind, aus denen Routing-Tabellen und/oder Forwarding-Tabellen für die der Steuerungseinheit zugeordneten Netzinfrastrukturgeräte abgeleitet werden.

10. Verfahren nach einem der Ansprüche 1 bis 9,
bei dem das Kommunikationsnetz in mehrere Partitionen unterteilt ist, die vorgebbare Anteile an Systemressourcen von Netzinfrastrukturgeräten umfassen, die der jeweiligen Partition zugeordnet sind, und bei dem die Steuerungseinheit bei Kommunikationsdienst-Anforderungen jeweils einen Pfad innerhalb der jeweiligen Partition ermittelt.

11. Verfahren nach einem der Ansprüche 1 bis 10,
bei dem die Informationen und/oder Dienste mittels der ersten Kommunikationsgeräte entsprechend Open Platform Communications Unified Architecture Protokoll zur Nutzung an den zweiten Kommunikationsgeräten bereitgestellt werden.

12. Verfahren nach einem der Ansprüche 1 bis 11,
bei dem die Steuerungseinheit bei einer Mehrzahl möglicher Zuordnungen zwischen den ersten Kommunikationsgeräten und den zweiten Kommunikationsgeräten anhand der zueinander passenden Angebote und Anforderungen sämtliche Optionen für die Zuordnungen ermittelt, bei dem die Steuerungseinheit für die ermittelten Optionen Pfade zwischen den jeweiligen ersten und zweiten Kommunikationsgeräten sowie deren Pfadkosten ermittelt und bei dem die Steuerungseinheit jeweils die Option mit den geringsten Pfadkosten für die Zuordnungen zwischen den ersten Kommunikationsgeräten und den zweiten Kommunikationsgeräten auswählt.

13. Verfahren nach einem der Ansprüche 1 bis 12,
bei dem sich die Steuerungseinheit (101, 102) gegenüber den zugeordneten Netzinfrastrukturgeräten (200-202) authentisiert und bei dem die Steuerungseinheit erst nach erfolgreicher Authentifizierung Steuerungszugriff auf die zugeordneten Netzinfrastrukturgeräte erhält.

14. Steuerungseinheit zur Durchführung eines Verfahrens nach einem der Ansprüche 1 bis 13, die dafür ausgestaltet und eingerichtet ist,
- Funktionen mehrerer zugeordneter Netzinfrastrukturgeräte (200-202) zu steuern, wobei die Netzinfrastrukturgeräte für eine Weiterleitung von Datagrammen innerhalb eines Kommunikationsnetzes vorgesehen sind,
- aus Speichereinheiten (210, 220) Angaben zu Angeboten von Informationen und/oder Diensten erster Kommunikationsgeräte (301) und/oder Angaben zu Anforderungen von Informationen und/oder Diensten zweiter Kommunikationsgeräte (302) abzufragen, wobei die Speichereinheiten jeweils einem Netzinfrastrukturgerät (201, 202) zugeordnet sind, an das zumindest ein erstes oder zweites Kommunikationsgerät angeschlossen ist,
- anhand zueinander passender Angebote und Anforderungen Zuordnungen zwischen den ersten Kommunikationsgeräten (301) und den zweiten Kommunikationsgeräten (302) zu erstellen und Pfade zwischen einander zugeordneten ersten und zweiten Kommunikationsgeräten zu ermitteln,
- aus den ermittelten Pfaden Weiterleitungsregeln für die zugeordneten Netzinfrastrukturgeräte (200-202) abzuleiten und an diese zur Anwendung zu übermitteln.
- die zugeordneten Netzinfrastrukturgeräte (200-202) dazu zu veranlassen, empfangene Datagramme entsprechend den vorgegebenen Weiterleitungsregeln weiterzuleiten.
